# EUROPEAN PATENT APPLICATION

(11) **EP 1 418 451 A1**
(43) Date of publication of application: **12.05.2004**
(21) Application number: 03025413.0
(22) Date of filing: 05.11.2003
(51) Int. Cl.: G02B 6/36

(54) **Method of fabricating an optical fiber block using silicon-glass anodic bonding technique**

(30) Priority: 07.11.2002 KR 2002068849
(71) Applicant: SAMSUNG ELECTRONICS CO., LTD., Suwon-City, Kyungki-do (KR)
(72) Inventor: Kim, Hyun-Ki, Paldal-gu Suwon-city Kyungki-do (KR); Kim, Dong-su, Paldal-gu Suwon-city Kyungki-do (KR); Lee, In-Jae, Paldal-gu Suwon-city Kyungki-do (KR)
(74) Representative: Lang, Johannes, Dipl.-Ing.

(57) **Abstract**

Disclosed is a method for fabricating an optical fiber block, in which a cover formed from glass is bonded onto a substrate, the top of which is provided with one or more grooves. The method comprising the steps of: heating the cover to a predetermined temperature; and applying an electric field so that electrostatic attraction is generated in the interface of the cover and the substrate in the state in which the heated cover is being seated on the top of the substrate, thereby bonding the cover and the substrate.

## Description

### BACKGROUND OF THE INVENTION

### 1. Field of the Invention

The present invention relates to an optical component and in particular to an optical fiber block used as an optical connector.

### 2. Description of the Related Art

An optical fiber block is connected to an input or output terminal of a planar lightwave circuit device (PLC) and typically used to arrange an optical fiber or an optical fiber array. It is also used as an input or output terminal for an micro-optic device.

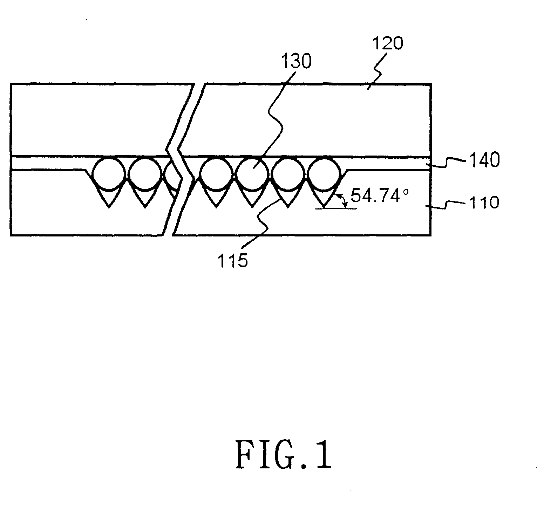

FIG. 1 is a cross-section view illustrating the construction of a conventional optical fiber block. As shown, the optical fiber block comprises a substrate 110 formed from silicon and a cover 120 formed from glass. The substrate 110 is provided with a plurality of V-grooves 115 whereto an optical fiber 130 is seated into each of the grooves. In order to secure the optical fibers 130, the substrate 110 and the optical fibers 130 are coated with polymer adhesive 140. A thermosetting adhesive, UV-curable adhesive may be used for the polymer adhesive 140. The bonding strength of the polymer adhesive 140 can be stabilized through a post-process, such as heat treatment or the like.

The cover 120 is seated onto the substrate 110 and the optical fibers coated with the polymer adhesive 140, thereby fixing and protecting the optical fibers 130 from the exterior environment.

However, the above conventional optical fiber block has a problem in that the adhesive material becomes deteriorated due to the characteristics of the polymer adhesive used to bond the glass cover and the thermal expansion coefficient of the adhesive is higher than those of objects to be adhered, causing some bonding strength phenomena.

Accordingly, there is a need for an improved method for fabricating an optical fiber block without suffering the bonding strength.

### SUMMARY OF THE INVENTION

The present invention relates to a method for fabricating an optical fiber block, which can improve the bonding strength and the reliability of a bonded article without using a polymer adhesive.

One embodiment of the present invention relates to a method for fabricating an optical fiber block using silicon-glass anodic bonding technique, in which a cover formed from glass is bonded onto a substrate, the top of which is provided with one or more grooves. The method comprising the steps of: heating the cover to a predetermined temperature; and, during the state in which the heated cover is seated on the top of the substrate, applying an electric field so that an electrostatic attraction is generated in the interface of the cover and the substrate, thereby bonding the cover and the substrate.

### BRIEF DESCRIPTION OF THE DRAWINGS

The above features and advantages of the present invention will be more apparent from the following detailed description taken in conjunction with the accompanying drawings, in which:
- FIG. 1: is a cross-section view showing the construction of a conventional optical fiber block;
- FIG. 2: is a flowchart showing a method for fabricating an optical fiber block according to the present invention; and,
- FIG. 3: is a schematic view showing an apparatus for fabricating an optical fiber block according to the present invention.

### DETAILED DESCRIPTION OF THE PREFERRED EMBODIMENTS

Hereinafter, preferred embodiments of the present invention will be described with reference to the accompanying drawings. For the purposes of clarity and simplicity, a detailed description of known functions and configurations incorporated herein will be omitted as it may make the subj ect matter of the present invention rather unclear.

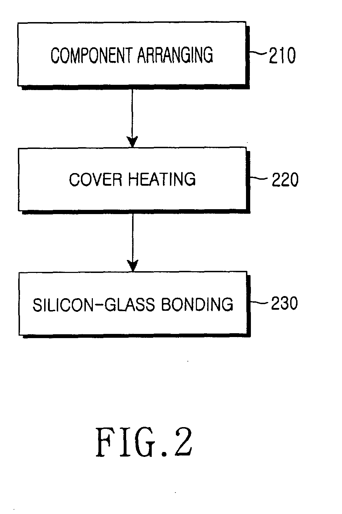

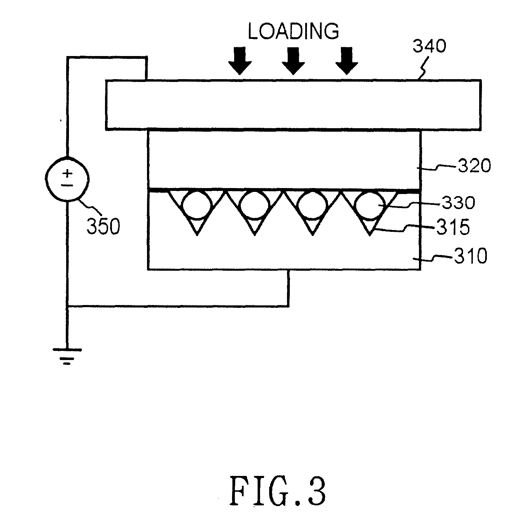

FIG. 2 is a flowchart illustrating the method for fabricating an optical fiber block according to the embodiment of the present invention, and FIG. 3. is a schematic view showing the apparatus for fabricating an optical fiber block according to the embodiment of the present invention.

The method for fabricating an optical fiber block comprises an arranging step 210, a heating step 220, and a bonding step 230.

The arranging step 210 includes the steps of: providing a substrate 310 formed from silicon and provided with one or more grooves 315 on the top thereof; seating an optical fiber 330 into each of the grooves 315; covering the top of the substrate with a cover 320 formed from glass; and applying a heater 340 in the form of a flat plate into close contact with the top of the cover 320. Here, the gap between the cover 320 and the substrate 310 does not exceed 1 µm, and the position, shape, construction, etc. of the heater 340 can be implemented selectively as desired.

In the heating step 220, the cover 320 is heated to a predetermined temperature by means of the heater 340, so that impurities contained in the glass cover 320 are caused to be readily mobile when an electric field is applied. For example, In the case where the cover 320 is formed from Pyrex glass (Corning Glass 7740), a certain amount of impurities such as sodium (Na), potassium (K), etc. are included in the cover 320, and when such a cover 320 is heated to a temperature of 200 °C or more, those impurities are electrically charged and become readily mobile when an electric field is applied.

In the bonding step 230, an electric field is applied in a state in which the cover 320 is heated to a predetermined temperature(typically in the range 300-500°C depending on the glass type), so that alkali-metal ions in the cover 320 become mobile and an electrostatic attraction occurs in the interface of the cover 320 and the substrate 310. In order to generate the electric field, a source 350 with a direct electric voltage is connected to the top of the heater 340 and the bottom of the substrate 310, then a direct electric voltage is applied at.a level not lower than 600 V. This causes alkali-metal cations (e.g. Na⁺ ions) to migrate from the silicon-glass interface resulting in a depletion layer with high electric field strength. The resulting electrostatic attraction brings the cover 320 and substrate 310 into intimate contact. Further, current flow of oxygen anions(O⁻) from the cover 320 to the substrate 310 results in an anodic reaction at the interface and the result is that the cover 320 becomes bonded to the substrate 310 with a permanent chemical bond. The bonding strength obtained in such a silicon-glass anodic bonding technique is very strong, and the bonding requires a time from several seconds to several minutes depending on the dimensions of objects to be bonded. In addition, if the bonding step 230 is performed in a vacuum environment, it is possible to achieve a high strength of silicon-glass bonding without inclusion of impurities.

In the embodiment, an electric voltage is applied using the metallic heater 340 and a metallic film coated on the bottom of the substrate 310, but the application of electric voltage can be implemented in different forms. For example, it is possible to apply an electric voltage using the metallic heater 340 and a flat metallic sheet closely in contact with the bottom of the substrate 310, or apply electric voltage using a first flat metallic sheet closely in contact with the top of the cover 320 and a second flat metallic sheet closely in contact with the bottom of the substrate 310 after removing the metallic heater 340. In addition, it is also possible to perform the bonding step 230 under a condition in which a predetermined level of weight is applied so that the substrate 310 and the cover 320 are arranged with a uniform gap between them or closely contacted with each other. For this purpose, one or more weights may be used which may be brought into close contact with the top of the heater 340 and apply a predetermined level of weight to the heater 340.

As described above, the method for fabricating an optical fiber block according to the present invention has an advantage in that it can improve bonding strength, easiness of working and reliability by using a silicon-glass bonding technique rather than polymer adhesive.

While the invention has been shown and described with reference to certain preferred embodiments thereof, it will be understood by those skilled in the art that various changes in form and details may be made therein without departing from the spirit and scope of the invention as defined by the appended claims.

## Claims

1. A method for fabricating an optical fiber block using silicon-glass anodic bonding technique, in which a cover formed from glass is bonded onto a substrate, the top of which is provided with one or more grooves, the method comprising the steps of:
heating the cover to a predetermined temperature; and
applying an electric field so that electrostatic attraction is generated in the interface of the cover and the substrate in the state in which the heated cover is being seated on the top of the substrate, thereby bonding the cover and the substrate.

2. The method according to claim 1, wherein in the heating step, an optical fiber is seated into each of the grooves of the substrate, and the top of the substrate is covered with the cover.

3. The method according to claim 1, wherein the bonding step is performed in a state in which a predetermined level of weight is being applied so that the substrate and the cover are brought into uniform and close contact with each other.

4. The method according to claim 1, wherein the bonding step is performed in a vacuum environment.

5. The method according to claim 1, wherein the cover is formed from Pyrex glass.
